# EUROPEAN PATENT APPLICATION

(11) **EP 1 178 023 A1**
(43) Date of publication of application: **06.02.2002**
(21) Application number: 01118926.3
(22) Date of filing: 03.08.2001
(51) Int. Cl.: C04B 35/44, C04B 35/66

(54) **High density refractory material containing calcium hexaluminate**

(30) Priority: 04.08.2000 US 632391
(71) Applicant: Alcoa Chemie GmbH, 60439 Frankfurt (DE)
(72) Inventor: Gnauck, Volker, 67030 Ludwigshafen am Rhein (DE); Berg, Klaus, 67030 Ludwigshafen am Rhein (DE); Buhr, Andreas, 60439 Frankfurt (DE); Garsel, Doris van, 60439 Frankfurt (DE); Kriechbaum, Gangolf W., 60439 Frankfurt (DE)
(74) Representative: Ebner von Eschenbach, Jennifer

(57) **Abstract**

A high density refractory material is made by combining into a mixture particles of an alumina source, a calcium oxide source, and a sintering aid; agglomerating portions of the mixture into granulates; and sintering the granulates at an elevated temperature. A preferred refractory material made by the process of the invention contains at least about 90 wt.% calcium hexaluminate. Granulates of the material have a bulk specific density greater than about 90% of theoretical density. The material is a useful aggregate, both alone and in combination with other refractory aggregates, for making shaped and unshaped refractory products.

## Description

### CONTAINING CALCIUM HEXALUMINATE

The present invention relates to a high density refractory material containing calcium hexaluminate and to a process for its manufacture. The refractory material is useful as an aggregate in formulations for making shaped and unshaped refractory products.

Refractory formulations including calcium hexaluminate as an ingredient have been known for some time. However, calcium hexaluminate formulations have not achieved widespread commercial use because existing processes for making high density calcium hexaluminate are expensive. Accordingly, there still remains a need for an efficient and economical process for making high density refractory materials containing calcium hexaluminate.

Miller U.S. Patents 3,269,848 and 3,312,558 disclose processes for making shapes and articles containing calcium hexaluminate as a principal ingredient. Miller's processes result in shapes and articles having low density because they require various burnout materials such as water, sawdust, particulate coke, and paper.

An article disclosing formation of calcium hexaluminate grains was written by An et al., "Control of Calcium Hexaluminate Grain Morphology in *in situ* Toughened Ceramic Composites", J. Mater. Sci. 31 (1996), pp. 3223-3229. Depending upon starting materials, grains made by processes disclosed in the article are either equiaxed or platelike. The authors' experimental procedure requires die-pressing and then isostatic pressing, followed by calcination and then pressureless sintering for 2 hours at 1650°C. After sintering the product was either a mixture of platelet calcium hexaluminate and equiaxed alumina or a mixture of equiaxed calcium hexaluminate and equiaxed alumina. Density was as high as 98.4% of theoretical.

A principal objective of the present invention is to provide an efficient and economical process for making a high density refractory material containing calcium hexaluminate.

A related objective of the invention is to provide a novel refractory material containing calcium hexaluminate.

Another objective of the invention is to provide a variety of formulations for shaped and unshaped refractories, containing the high density calcium hexaluminate refractory material.

Additional objectives and advantages of our invention will become apparent to persons skilled in the art from the followed detailed description of some particularly preferred embodiments.

In accordance with the present invention, there is provided an efficient and economical process for making a high density refractory material containing calcium hexaluminate ("CA6"). The process includes steps of combining into a mixture particles of the starting materials, agglomerating portions of the mixture into granulates by a pressureless or low pressure technique, and sintering the granulates at an elevated temperature. Suitable agglomerating techniques include extrusion, pelletizing, ball formation, granulation, and briquetting.

The ingredients or starting materials for the process of the invention include a source of alumina, a source of calcium oxide, and a sintering aid. Also used herein, the term "source of alumina" includes alumina, alumina hydrate, colloidal or polymeric sols containing aluminum, and mixtures thereof. The term "alumina hydrate" refers to hydrated aluminum oxide or Al₂O₃·xH₂O wherein x varies between about 0.1 and 3. The aluminum containing sols yield alumina upon calcination.

As used herein, the term "source of calcium oxide" includes calcium oxide, calcium hydroxide, calcium carbonate, and colloidal or polymeric sols containing calcium. The sols yield calcium oxide when they are calcined.

Some suitable sintering aids include magnesium silicates, such as steatite, 3MgO·4SiO₂·H₂O; serpentine, 3MgO·2SiO₂·2H₂O; forsterite, 2MgO·SiO₂; enstatite, MgO·SiO₂; phlogopite, KMg₃[(F, OH)₂AlSi₃O₁₀], olivine 2(MgO, Fe)·SiO₂; and colloidal or polymeric sols of magnesium-containing silicates.

Some suitable non-silicate sintering aids include non-silicate compounds of silicon, magnesium, zirconium, titanium, iron, manganese, cobalt, nickel, copper, vanadium, zinc, and chromium. Oxides of these elements are preferred. The non-silicate sintering aids may be provided to the mixture as crystalline solids or as colloidal or polymeric sols.

The alumina source comprises about 83-97 wt.% of the mixture on an Al₂O₃ basis, preferably about 86-95 wt.%, more preferably about 89-93.5 wt.%, and most preferably about 90-93 wt.%. The calcium oxide source comprises about 3-17 wt.% of the mixture on a CaO basis, preferably about 5-14 wt.%, more preferably about 6.5-11 wt.% and most preferably about 7-10 wt.%. The sintering aid comprises about 0.01-1 wt.% of the mixture, preferably about 0.1-0.7 wt.%, and optimally about 0.2-0.6 wt.%.

The alumina, calcium oxide, and sintering aid are provided in the form of particles that can be intimately combined by any preferred mixing technique, including wet grinding, dry grinding, and blending. Preferably at least about 80 wt.% of the particles pass through a 0.045 mm sieve after blending, more preferably about 95 wt.%, and optimally 100 wt.%. Median particle diameter as analyzed by laser granulometry is preferably less than about 15 microns, and ideally less than about 5 microns.

Portions of the blended mixture are agglomerated to form small bodies, called "granulates" herein. Agglomeration may be performed by a variety of pressureless or low pressure techniques, including extrusion, pelletizing, ball formation, briquetting and granulation. The term "low pressure" means that pressure applied to the granulates when they are formed is less than about 50 bar or 5 N/mm². Generally, up to about 18 wt.% moisture is added to prevent the granulates from fragmenting.

Optionally, the formed granulates may be dried to remove moisture before they are sintered. Drying for about three-five hours at 100-200°C is generally adequate to remove most moisture added during the agglomerating process.

The dried agglomerates are sintered in a kiln at an elevated temperature for a time sufficient to form a refractory material having high CA6 content as determined by x-ray diffraction. The sintering temperature is at least about 1600°C, preferably at least about 1650°C, and more preferably about 1700°C. Sintering in a gas fired kiln is preferred, but electrical and plasma heating are also suitable.

The product is a refractory material having CA6 as its most prevalent phase, as determined by x-ray diffraction. CA6 phase content is greater than about 40%, preferably greater than about 60%, more preferably greater than about 80%, and most preferably greater than about 90%, all as determined by x-ray diffraction. Other phases in the product include calcium dialuminate, CaAl₄O₇; calcium monoaluminate, CaAl₂O₄; and alumina, Al₂O₃.

The dense sintered calcium hexaluminate product has a median particle size of about 30 mm or less. Particle sizes in a range of about 0.1 microns to 10 mm are preferred. Bulk specific density is greater than about 80% of theoretical, preferably greater than about 90%. Apparent porosity is less than about 15%, preferably less than about 10%, and most preferably less than about 5%.

The high density, CA6 refractory material of our invention is a useful aggregate for refractories exposed to temperatures up to about 1830°C. The refractories may be either shaped or unshaped products. Shaped forms include pressed and fired bricks, chemically bonded bricks, and more complex molded shapes including channels, troughs, and tundishes. Unshaped products include castables for vibration, self-flowing, or shotcreting placement, and gunning and ramming materials. The unshaped products generally include one or more binders including calcium aluminate cements and organic and inorganic binders.

Refractory products containing the high density CA6 material of our invention generally also include one or more alumina rich aggregates selected from tabular alumina, sintered alumina, brown and white fused corundum, spinels (including magnesium rich spinels, alumina rich spinels and hercynite), bauxite, andalusite, sillimanite, kyanite, and mullite. Other suitable aggregates include low alumina aggregates such as chamotte, and basic materials including magnesia. High alumina aggregates containing 60 wt.% or more Al₂O₃ are preferred.

Refractory products made with the high density CA6 material of our invention are suitable for uses in production of ferrous and non-ferrous metals, glass, petrochemicals, chemicals, lime, cement, and sugar. They are also useful ingredients for making incinerators and industrial furnaces. The high density CA6 material may also be used as an ingredient of ceramic and fine ceramic products.

In one preferred example of the invention, a 300 g mixture was made by blending limestone, CaCO₃, calcined alumina, Al₂O₃, and a sintering aid in a laboratory roller bank mill having a ceramic pot and ceramic milling balls. The sintering aid was steatite, 3MgO·2SiO₂·H₂O. The raw materials were blended for two hours in the lab mill, until average particle size (d₅₀) was about 1.42 microns as determined by laser granulometry. The mixture contained about 8 wt.% of the limestone (CaO basis), about 0.5 wt.% of the sintering aid, and remainder Al₂O₃.

About 10% water was added to the mixture and portions were formed into 5-8g pellets. The pellets were fired for three hours at 1700°C in an electric lab furnace, and cooled.

Density of the fired pellets was determined by two different methods, the water displacement method (Archimedes principal) and by caliper measurement. Both methods revealed a high sintered density of about 3.25 g/cm³, about 96% of theoretical density. Apparent porosity was about 4.54%.

Mineral composition of the test pellets was almost pure CA6 plus a small amount of calcium dialuminate (CA2) and a trace of corundum, as determined by x-ray diffraction.

Inspection of the product morphology by scanning electron microscopy (SEM) showed a dense structure of this, platelet-shaped, irregular, interwoven crystals. Crystal length was 15 µm maximum, with up to 5 µm thickness. At the necking points of crystals small pores with roughly 1-10 µm diameter are visible. The crystal and pore structure both indicate excellent thermal shock properties, an essential property for material performance at high temperature cycling conditions.

Two comparative tests were run without the sintering aid. When the mixture was milled to an average particle size (d₅₀) of 3.8 µm, bulk sintered density was 2.81 g/cm³ (83% of theoretical) with 21.74% apparent porosity. Reducing the average particle size to 1.39 µm increased the bulk specific density to 2.88 g/cm³. The porosity was not tested in this example.

The high density CA6 refractory material of our invention is a useful aggregate for making shaped and unshaped refractory products. One example of a formulation for making shaped, carbon-bonded bricks comprises about 50 wt.% coarse tabular alumina and about 20 wt.% coarse sintered CA6, both having a particle size above 0.5 mm; about 10 wt.% fine ground sintered CA6, about 5 wt.% fine ground carbon particles, and about 10 wt.% calcined/reactive alumina, all having a particle size less than 0.5 mm; and about 5 wt.% of a carbon-containing binder.

One example of a formulation for making an unshaped cement castable comprises about 50 wt.% coarse sintered CA6 and about 20 wt.% spinel, both having a particle size above 0.5 mm; about 10 wt.% fine ground tabular alumina having a particle size of less than 0.5 mm; and about 20 wt.% calcium aluminate cement containing about 80 wt.% Al₂O₃. An unshaped cement castable is made by mixing about 100 parts by weight of the formulation with about 5-12 parts by weight water, and suitable dispersants. For making low cement castables or ultra-low cement castables, 70% Al₂O₃ calcium aluminate cement instead of 80% Al₂O₃ calcium aluminate cement can be used and part of the calcium aluminate cement may be replaced by fine ground dense sintered CA6, calcined/reactive alumina, or mixtures thereof.

The foregoing detailed description of our invention has been made with reference to some particularly preferred examples. Persons skilled in the art will understand that numerous changes and modifications may be made in the invention without departing from the spirit and scope of the following claims.

## Claims

1. A process for making a high density refractory material comprising calcium hexaluminate, said process comprising:
(a) combining into a mixture particles of
(1) a source of alumina,
(2) a source of calcium oxide, and
(3) a sintering aid, said sintering aid comprising not more than about 1 wt.% of the mixture,
(b) agglomerating portions of the mixture into granulates by a pressureless or low pressure technique, and
(c) sintering the granulates at an elevated temperature for a time sufficient to form a refractory material having calcium aluminate as its most prevalent phase.

2. The process of claim 1, wherein said source of alumina is selected from the group consisting of alumina, alumina hydrate, colloidal or polymeric aluminum containing sols, and mixtures thereof.

3. The process of claim 1, wherein said source of calcium oxide is selected from the group consisting of calcium oxide, calcium hydroxide, calcium carbonate, colloidal or polymeric calcium containing sols, and mixtures thereof.

4. The process of claim 1, wherein said mixture comprises about 83-97 wt.% Al₂O₃ and about 3-17 wt.% CaO, and the high density refractory material comprises at least about 40 wt.% calcium hexaluminate.

5. The process of claim 1, wherein said mixture comprises about 86-95 wt.% Al₂O₃ and about 5-14 wt.% CaO, and said high density refractory material comprises at least about 60 wt.% calcium hexaluminate.

6. The process of claim 1, wherein said mixture comprises about 89-93.5 wt.% Al₂O₃ and about 6.5-11 wt.% CaO and said high density refractory material comprises at least about 80 wt.% calcium hexaluminate.

7. The process of claim 1, wherein said mixture comprises about 90-93 wt.% Al₂O₃ and about 7-10 wt.% calcium hexaluminate and said high density refractory material comprises at least about 90 wt.% calcium hexaluminate.

8. The process of claim 1, wherein said sintering aid comprises a magnesium silicate selected from the group consisting of steatite, serpentine, forsterite, enstatite, phlogopite, olivine, sols containing magnesium silicates, and mixtures thereof.

9. The process of claim 1, wherein said sintering aid comprises a compound of an element selected from the group consisting of silicon, magnesium, zirconium, titanium, iron, manganese, cobalt, nickel, copper, vanadium, zinc, chromium, and mixtures thereof.

10. The process of claim 1 wherein said mixture comprises particles having a median particle diameter of less than about 15 microns.

11. The process of claim 1, wherein said mixture comprises particles having a median particle diameter of less than about 5 microns.

12. The process of claim 1, wherein the sintered granulates have a bulk specific density of greater than about 90% of theoretical density, calcium hexaluminate content greater than about 40 wt.%, and apparent porosity less than about 10%.

13. The process of claim 1, wherein the sintered granulates have a bulk specific density of greater than about 90% of theoretical density.

14. The process of claim 1, wherein the sintered granulates have a calcium hexaluminate content greater than about 40 wt.%.

15. The process of claim 1, wherein the sintered granulates have a calcium hexaluminate content greater than about 60 wt.%.

16. The process of claim 1, wherein the sintered granulates have a calcium hexaluminate content greater than about 80 wt.%.

17. The process of claim 1, wherein the sintered granulates have a calcium hexaluminate content greater than about 90 wt.%.

18. The process of claim 1, wherein said pressureless or low pressure technique is selected from the group consisting of extrusion, pelletizing, ball formation, granulation, and briquetting.

19. The process of claim 1, wherein said pressureless or low pressure technique includes adding to the mixture up to about 18 wt.% moisture.

20. A refractory material comprising calcium hexaluminate made by the process of claim 1, having a grain size in the range of about 0.5 µm to 30 mm, and suitable for uses as fine or coarse aggregate within refractory formulations.

21. A refractory material made by the process of claim 1, with a calcium hexaluminate content of 40, preferably 60, more preferably 80, and most preferably 90 wt.% and a bulk density of at least 90 % of theoretical density which can be used as aggregate within refractory formulations both singly and in combination with various other refractory aggregates.

22. A shaped refractory product suitable for use in applications up to about 1830°C and comprising high density refractory material made in accordance with the process of claim 1.

23. An unshaped refractory product suitable for use in vibration, self flowing, dry gunning, ramming or shotcreting placement, said unshaped refractory product containing high density refractory material made in accordance with claim 1.
